# EUROPEAN PATENT APPLICATION

(11) **EP 4 772 676 A1**
(43) Date of publication of application: **08.07.2026**
(21) Application number: 24955202.7
(22) Date of filing: 26.11.2024
(51) Int. Cl.: C25B 1/04, C25B 9/23, B01D 50/00

(54) **HYDROGEN GENERATOR**

(30) Priority: 08.10.2024 CN 202422425631 U
(71) Applicant: EVE Hydrogen Energy Co., LTD., HuiZhou Guangdong 516000 (CN)
(72) Inventor: LI, Xiaopeng, Huizhou, Guangdong 516000 (CN); CAI, Guihan, Huizhou, Guangdong 516000 (CN); LOU, Junyang, Huizhou, Guangdong 516000 (CN); YIN, Zhenglei, Huizhou, Guangdong 516000 (CN); WANG, Ying, Huizhou, Guangdong 516000 (CN)
(74) Representative: Michalski Hüttermann & Partner mbB
(86) International application number: PCT/CN2024/134490
(87) International publication number: WO 2026/076795

(57) **Abstract**

The present disclosure discloses a hydrogen generator. The hydrogen generator includes a housing, and an electrolyzer, an electrolyte tank, a gas-liquid separator, and a purification apparatus mounted in the housing. A diaphragm of the electrolyzer is an anion-exchange membrane. The electrolyzer is in communication with the electrolyte tank through a pipeline. The gas-liquid separator is provided with a first gas inlet and a third gas outlet. The first gas inlet is in communication with a first gas outlet of the electrolyzer through a pipeline. The purification apparatus is provided with a second gas inlet. The third gas outlet is in communication with the second gas inlet through a pipeline.

## Description

### CROSS-REFERENCE TO RELATED APPLICATION(S)

This application claims priority to Chinese Patent Application No. 202422425631.X, filed October 8, 2024 to China National Intellectual Property Administration (CNIPA), the entire disclosure of which is hereby incorporated by reference.

### TECHNICAL FIELD

This disclosure relates to the field of hydrogen production technology, and in particular, to a hydrogen generator.

### BACKGROUND

As an efficient method for producing high-purity hydrogen, the principles of the related electrolytic water hydrogen generators mainly follow two routes: alkaline water electrolysis (ALK) and proton exchange membrane water electrolysis (PEM). Alkaline electrolyzer hydrogen generators generally use concentrated alkali as the electrolyte. Since the electrolyte the alkaline electrolyzer hydrogen generators use is generally a potassium hydroxide solution with a mass concentration of 30%, this requires the supporting components of the system to have stronger alkali corrosion resistance. In the later stage of use, it will lead to a rapid decline in service life and an increase in maintenance costs. Alkaline hydrogen generators have poor performance and low efficiency at normal or low temperatures. The low current density results in a larger volume required for the same flow rate, increasing the consumption of material parts and making the alkaline hydrogen generators inconvenient to move. The alkaline electrolyzer hydrogen generators have disadvantages such as low efficiency, high corrosion, operating temperature limitations, and low gas production purity. In the PEM electrolyzer hydrogen generator using the proton exchange membrane as the technical route, due to its acidic catalytic system, the PEM hydrogen generator needs to use noble metal catalysts such as platinum-based, iridium-based noble metals and titanium-based metals. Due to the poor stability of noble metal catalysts, the PEM hydrogen generator has high requirements for water quality. The PEM hydrogen generator has the disadvantages of high cost and poor stability.

### TECHNICAL PROBLEM

A hydrogen generator is provided in embodiments of the present disclosure. An anion-exchange membrane is used as a core material of the electrolyzer. The hydrogen generated by the electrolyzer is separated by a gas-liquid separator and then dried by a purification apparatus to produce dry hydrogen with high purity, thereby achieving the technical effect of obtaining high-purity hydrogen with low processing costs and high electrolytic water efficiency.

### TECHNICAL SOLUTIONS

A hydrogen generator is provided in embodiments of the present disclosure. The hydrogen generator includes an electrolyzer, an electrolyte tank, a gas-liquid separator, a purification apparatus, and a housing. The electrolyzer includes an anion-exchange membrane. The electrolyzer has a first liquid inlet, a first liquid outlet, and a first gas outlet. The electrolyte tank has a second liquid inlet, a second liquid outlet, a filling port, and a second gas outlet. The first liquid inlet is in communication with the second liquid outlet through a pipeline. The first liquid outlet is in communication with the second liquid inlet through a pipeline. The second gas outlet is configured to discharge oxygen. The gas-liquid separator is provided with a first gas inlet, a liquid discharge outlet, and a third gas outlet. The first gas inlet is in communication with the first gas outlet through a pipeline. The liquid discharge outlet is configured to discharge liquid separated by the gas-liquid separator. The purification apparatus is provided with a second gas inlet and a fourth gas outlet. The third gas outlet is in communication with the second gas inlet through a pipeline. The electrolyzer, the electrolyte tank, the gas-liquid separator, and the purification apparatus are mounted in the housing.

### BENEFICIAL EFFECTS

The hydrogen generator provided in the embodiments of the present disclosure includes the electrolyzer, the electrolyte tank, the gas-liquid separator, and the purification apparatus that are integrated in the housing. An electrolyte circulation is formed in the electrolyte and the electrolyte tank. A membrane of the electrolyzer adopts the anion-exchange membrane, which has low requirements for water quality and can improve the efficiency of water electrolysis and reduce equipment investment and maintenance costs. The hydrogen produced by the electrolyzer is separated by the gas-liquid separator and then dried by the purification apparatus to produce dry hydrogen with high purity, thereby providing the advantages of high production efficiency, simple maintenance, compact structure, good stability, and strong adaptability.

### BRIEF DESCRIPTION OF THE DRAWINGS

FIG. 1 is a schematic view of a principle of a hydrogen generator provided in embodiments of the present disclosure.
FIG. 2 is a schematic structural view of a hydrogen generator provided in embodiments of the present disclosure.
FIG. 3 is a schematic structural view of a gas-liquid separator in a hydrogen generator provided in embodiments of the present disclosure.
FIG. 4 is a control block view of a hydrogen generator provided in embodiments of the present disclosure.
FIG. 5 is a schematic view of a principle of an electrolyzer in a hydrogen generator provided in embodiments of the present disclosure.

Description of reference signs of the accompanying drawings:
10, hydrogen generator;
100, electrolyzer; 110, first liquid inlet; 120, first liquid outlet; 130, first gas outlet; 140, anion-exchange membrane; 150, catalyst layer; 160, gas diffusion layer; 170, anode plate; 180, cathode plate; 200, electrolyte tank; 210, second liquid inlet; 220, second liquid outlet; 230, filling port; 240, second gas outlet; 250, second check valve; 300, gas-liquid separator; 310, first gas inlet; 320, liquid discharge outlet; 330, third gas outlet; 340, separator body; 350, filter; 360, gas-liquid separation mechanism; 361, cyclone plate; 362, demister; 363, flow guide cylinder; 370, liquid discharge pipe; 371, first section; 372, second section; 380, liquid discharge valve; 390, liquid-level detection apparatus; 400, purification apparatus; 410, second gas inlet; 420, fourth gas outlet; 430, gas outlet pipeline; 440, pressure switch; 460, first check valve; 470, safety valve; 500, housing; 510, heat dissipation apparatus; 600, power supply; 700, control module; 800, flow display module; 900, pressure display module.

### DETAILED DESCRIPTION

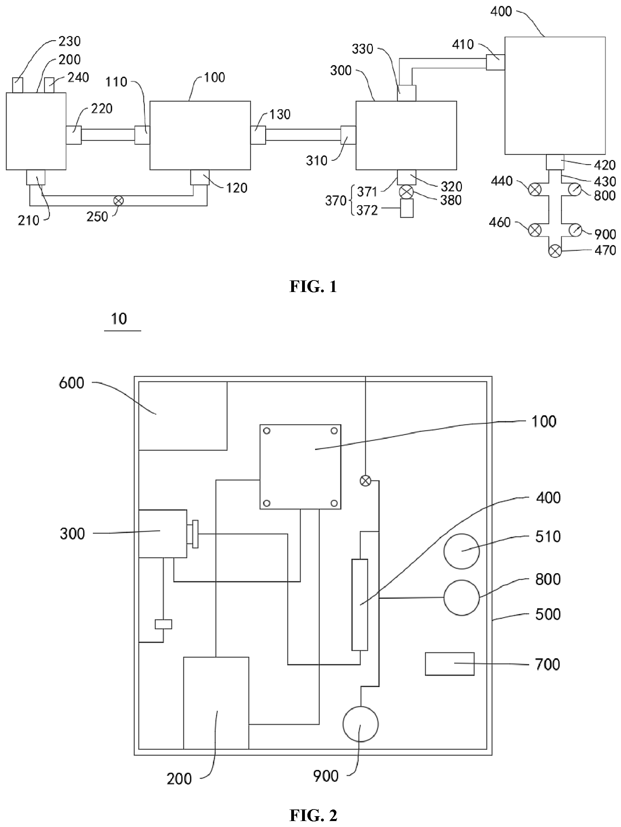

Reference can be made to FIG. 1 and FIG. 2, where FIG. 1 is a schematic view of a principle of a hydrogen generator provided in embodiments of the present disclosure, and FIG. 2 is a schematic structural view of a hydrogen generator provided in embodiments of the present disclosure. A hydrogen generator 10, provided in embodiments of the present disclosure, includes an electrolyzer 100, an electrolyte tank 200, a gas-liquid separator 300, a purification apparatus 400, and a housing 500.

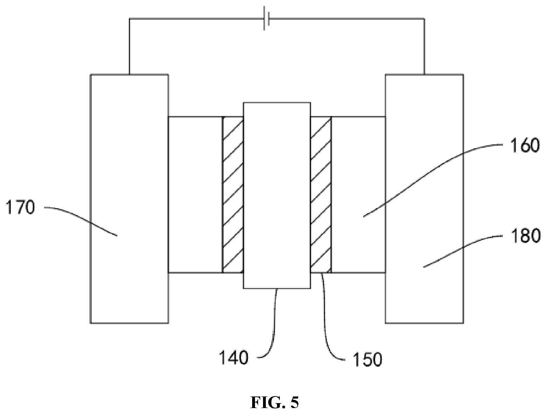

In some embodiments of the present disclosure, referring to FIG. 1 and FIG. 5, the electrolyzer 100 is an anion-exchange membrane electrolyzer. Exemplarily, the electrolyzer 100 is provided with a first liquid inlet 110, a first liquid outlet 120, and a first gas outlet 130. Inside the electrolyzer 100, there are an anion-exchange membrane 140, a catalyst layer 150, a gas diffusion layer 160, an anode plate 170, and a cathode plate 180. The anode plate 170 and the cathode plate 180 are arranged opposite to each other. The anion-exchange membrane 140, the catalyst layer 150, and the gas diffusion layer 160 are located between the anode plate 170 and the cathode plate 180. The catalyst layer 150 is provided on both sides of the anion-exchange membrane 140. The gas diffusion layer 160 is provided on the side of the catalyst layer 150 away from the anion-exchange membrane 140. The catalyst layer 150 is made of non-noble metals such as nickel. The electrolyte enters the electrolyzer 100 from the first liquid inlet 110, and the electrolyte may be a 5% wt alkaline solution. When an electric potential is applied to the electrolyzer 100, an oxygen evolution reaction (OER: 2OH⁻ - 2e⁻ → 1/2O₂ + H₂O) occurs on the anode plate 170 side, and a hydrogen evolution reaction (HER: 2H₂O + 2e⁻ → H₂ + 2OH⁻) occurs on the cathode plate 180 side. The anion-exchange membrane 140 is selective, allowing only anions to pass through and blocking the transmission of cations. The fast ion transmission channel provided by the anion-exchange membrane 140 can improve the reaction efficiency. The hydrogen generated by the electrocatalysis of the electrolyte is discharged from the first gas outlet 130 of the electrolyzer 100. In some embodiments of the present disclosure, the electrolyzer 100 can improve the reaction efficiency. The electrolyzer 100 usually requires a relatively high electric potential to achieve the electrolysis process, while the zero-gap design of the anion-exchange membrane 140 can reduce the reaction energy consumption and achieve high performance and high efficiency. By adjusting the electric potential or the current density, the reaction process can also be precisely controlled. The electrolyzer 100 has the advantages of high efficiency, low cost, and low water-quality requirements.

In some embodiments of the present disclosure, referring to FIG. 1, the electrolyte tank 200 is configured to store the electrolyte. The electrolyte tank 200 has a second liquid inlet 210, a second liquid outlet 220, a filling port 230, and a second gas outlet 240. The first liquid inlet 110 is in communication with the second liquid outlet 220 through a pipeline, and the first liquid outlet 120 is in communication with the second liquid inlet 210 through a pipeline, thereby forming an electrolyte circulation. The oxygen generated during the electrolysis of the electrolyte is set to be discharged from the second gas outlet 240. The electrolyte can be replenished into the electrolyte tank 200 through the filling port 230. In addition, the electrolyte tank 200 may further be provided with an emptying port, and the emptying port is configured to empty the electrolyte in the electrolyte tank 200.

In some embodiments of the present disclosure, referring to FIG. 1, the gas-liquid separator 300 is provided with a first gas inlet 310, a liquid discharge outlet 320, and a third gas outlet 330. The first gas inlet 310 is in communication with the first gas outlet 130 through a pipeline. The hydrogen generated by the electrolyzer 100 is discharged through the first gas outlet 130 and enters the gas-liquid separator 300 from the first gas inlet 310. The gas-liquid separator 300 is configured to separate the trace water vapor mixed in the hydrogen, and the separated liquid is discharged through the liquid discharge outlet 320. The liquid discharge outlet 320 may be in communication with the electrolyte tank 200 to reuse the separated electrolyte, or the liquid discharge outlet 320 may be in communication with a waste liquid tank.

In some embodiments of the present disclosure, referring to FIG. 1, the purification apparatus 400 is provided with a second gas inlet 410 and a fourth gas outlet 420. The third gas outlet 330 is in communication with the second gas inlet 410 through a pipeline. The fourth gas outlet 420 is configured to discharge hydrogen. The purification apparatus 400 includes multiple molecular sieves. The hydrogen separated by the gas-liquid separator 300 enters the purification apparatus 400 for drying, and impurity gases in the hydrogen are absorbed to remove oxygen, thereby producing dry hydrogen with high purity.

In some embodiments of the present disclosure, referring to FIG. 2, the housing 500 has a rectangular box structure. The electrolyzer 100, the electrolyte tank 200, the gas-liquid separator 300, and the purification apparatus 400 are mounted in the housing 500. The electrolyzer 100, the electrolyte tank 200, the gas-liquid separator 300, and the purification apparatus 400 are integrated by the housing 500, and the hydrogen generator 10 has a small volume, light weight, and good portability.

It can be understood that in some embodiments of the present disclosure, the hydrogen generator includes the electrolyzer 100, the electrolyte tank 200, the gas-liquid separator 300, and the purification apparatus 400 integrated inside the housing 500. An electrolyte circulation is formed in the electrolyzer 100 and the electrolyte tank 200. The membrane of the electrolyzer 100 adopts the anion-exchange membrane. Under the catalysis of the anion-exchange membrane and the catalyst, the electrolyte is electrolyzed to produce high-purity hydrogen, with high electrolysis efficiency. The anion-exchange membrane has low requirements for the water quality of the electrolyte, and pure water can be used, thereby reducing equipment investment and maintenance costs, and providing the advantages of high efficiency, low cost, and low water-quality requirements.

In some embodiments, referring to FIG. 2, the hydrogen generator 10 further includes a power supply 600. The power supply 600 is electrically connected to the electrolyzer 100. The power supply 600 is disposed in the housing 500. The power supply 600 is configured to supply power to the electrolyzer. The power supply 600 is a direct current (DC) power supply. Integrating the power supply 600 inside the housing 500 facilitates the overall transfer of the hydrogen generator 10, with good portability and a wide range of applications. As a variation, the power supply 600 may be disposed outside the housing 500.

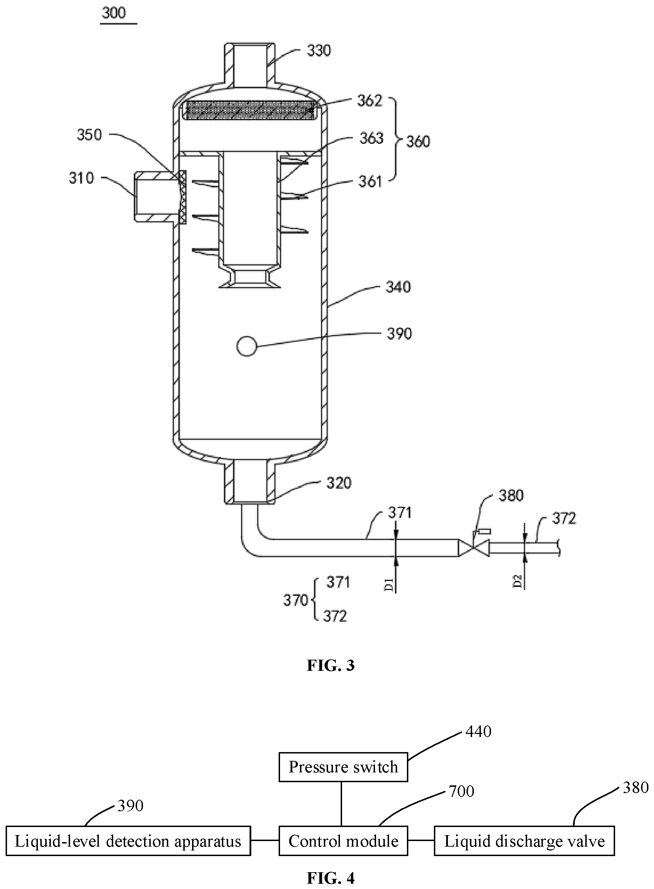

In some embodiments, referring to FIG. 3, the gas-liquid separator 300 includes a separator body 340, a filter 350, and a gas-liquid separation mechanism 360.

In some embodiments of the present disclosure, the separator body 340 is a cylindrical barrel made of 316 stainless steel that can resist strong alkalis, which can ensure the processing flow of the gas-liquid separator and increase the gas storage volume. The inner diameter of the separator body 340 is 40 mm, and the height of the separator body 340 is 80 mm, with a relatively small overall size. The first gas inlet 310, the liquid discharge outlet 320, and the third gas outlet 330 are disposed on the separator body 340. The first gas inlet 310 is disposed on the side wall of the separator body 340. The third gas outlet 330 and the liquid discharge outlet 320 are disposed opposite to each other, for example, in an axial direction of the barrel, the third gas outlet 330 is disposed at the top of the barrel, and the liquid discharge outlet 320 is disposed at the bottom of the barrel. The filter 350 is disposed inside the separator body 340 and is disposed opposite to the first gas inlet 310. The filter 350 may be a high-mesh filter screen, and the filter 350 is made of alkali-resistant materials, such as stainless steel. The mesh size of the filter screen is from 40 mesh to 80 mesh. The filter screen completely covers the first gas inlet 310. The hydrogen entering from the first gas inlet 310 is filtered by the filter screen before entering the separator body 340. The hydrogen electrolyzed from the electrolyzer 100 undergoes preliminary water-vapor separation through the filter 350. The gas-liquid separation mechanism 360 is disposed inside the separator body 340 and is disposed opposite to the third gas outlet 330. After the water vapor separated by the filter 350 is completely separated by the gas-liquid separation mechanism 360, the hydrogen is discharged through the third gas outlet 330. The gas-liquid separation mechanism 360 is made of alkali-resistant materials, such as stainless steel.

In some embodiments, referring to FIG. 3, the gas-liquid separation mechanism 360 includes a cyclone plate 361, a demister 362, and a flow guide cylinder 363. Both the flow guide cylinder 363 and the demister 362 are fixedly connected to the separator body 340. The cyclone plate 361 is circumferentially mounted on the flow guide cylinder 363. The demister 362 is closer to the third gas outlet 330 than the flow guide cylinder 363.

In some embodiments of the present disclosure, referring to FIG. 3, the demister 362 includes a mounting plate and multiple corrugated plates. The mounting plate is fixedly connected to the separator body 340. The multiple corrugated plates are vertically arranged at equal intervals, and a passage for gas to pass through is formed between two adjacent corrugated plates. The passage formed by the corrugated plates is also wave-shaped. When the gas is discharged through the passage, the gas-liquid molecules collide with the corrugated plates and condense coalesce into droplets on the corrugated plates, thereby realizing gas-liquid separation with good separation effect.

In some embodiments of the present disclosure, referring to FIG. 3, the flow guide cylinder 363 has a through cylindrical structure, and the flow guide cylinder 363 is coaxial with the separator body 340. The flow guide cylinder 363 is provided with a connecting portion at one end of the flow guide cylinder 363 close to the third gas outlet 330. The flow guide cylinder 363 is fixedly connected to the inner wall of the separator body 340 through the connecting portion. The flow guide cylinder 363 is provided with a necking structure at the other end of the flow guide cylinder 363, thereby ensuring that gas can pass through while condensing as many gas-liquid molecules in the gas as possible.

In some embodiments of the present disclosure, referring to FIG. 3, the cyclone plate 361 is a plate body helically arranged along an axis of the flow guide cylinder 363. The cyclone plate 361 is fixedly connected to the outer wall of the flow guide cylinder 363. The cyclone plate 361 is arranged perpendicular to the axis of the flow guide cylinder 363. The gas flows upward in a spiral path along the cyclone plate 361, and the gas-liquid molecules in the gas collide with the cyclone plate 361, condense and coalesce into droplets, thereby realizing gas-liquid separation.

It can be understood that in some embodiments of the present disclosure, the gas-liquid separation mechanism 360 includes the cyclone plate 361, the demister 362, and the flow guide cylinder 363, thereby realizing three-stage gas-liquid separation. The airflow enters the separator body 340 tangentially through the first gas inlet 310 and moves in the space outside and inside the flow guide cylinder 363. The gas outside the flow guide cylinder 363 flows along the plate body of the cyclone plate 361. The gas performs a rotational centrifugal motion, and the inertial centrifugal force can separate the larger liquid droplets in the gas from the gas, thereby realizing the first-stage gas-liquid separation. Due to the difference in specific gravity between gas and liquid, the gas moves upward along the inner side of the flow guide cylinder 363. During the upward movement of the airflow, under the influence of gravity, droplets with relatively larger particle sizes experience a gradual reduction in upward velocity and eventually develop a downward velocity, thereby realizing the second-stage gas-liquid separation. The gas that undergoes the second-stage gas-liquid separation continues to flow upward through the demister 362 to realize the third-stage gas-liquid separation. The hydrogen prepared through multi-stage gas-liquid separation has a better separation effect and a higher purity.

In some embodiments, referring to FIG. 3, the gas-liquid separator 300 further includes a liquid discharge pipe 370 in communication with the liquid discharge outlet 320. The liquid discharge pipe 370 is provided with a liquid discharge valve 380. The liquid discharge pipe 370 can be opened or closed by controlling the liquid discharge valve 380, which is convenient to operate.

In some embodiments, referring to FIG. 3, the liquid discharge pipe 370 includes a first section 371 and a second section 372 in communication with the first section 371. The first section 371 is located between the liquid discharge outlet 320 and the liquid discharge valve 380. The second section 372 is located on one side of the liquid discharge valve 380 facing away from the liquid discharge outlet 320. The pipe diameter of the first section 371 is larger than the diameter of the second section 372.

The liquid discharge pipe 370 is designed as two sections with different pipe diameters. The pipe diameter of the section closer to the separator body 340 is larger than the pipe diameter of the other section, which stabilizes the liquid discharge flow rate, and thereby achieving the purpose of noise reduction.

In some embodiments, as illustrated in FIG. 3, the pipe diameter of the first section 371 is *D1,* and the pipe diameter of the second section 372 is *D2. D1 = a* * D2, where 1.6 ≤ *a* ≤ 8. The value of *a* may be 1.6, 2.5, 3.1, 4.0, 5.3, 6.8, 7.5, 8.0, or other unlisted values. The design of the inner diameter ratio between the first section 371 and the second section 372 is reasonable, which can achieve a better noise reduction effect.

In some embodiments, as illustrated in FIG. 3, the pipe diameter of the first section 371 is *D1,* and 4 mm ≤ *D1* ≤ 8 mm. The value of *D1* may be 4 mm, 4.6 mm, 5.0 mm, 5.5 mm, 6.1 mm, 7.0 mm, 7.7 mm, 8 mm, or other unlisted values.

In some embodiments, as illustrated in FIG. 3, the pipe diameter of the second section 372 is *D2,* and 1.0 mm ≤ *D2* ≤ 2.5 mm. The value of *D1* may be 1.0 mm, 1.3 mm, 1.8 mm, 2.0 mm, 2.2 mm, 2.5 mm, or other unlisted values.

In some embodiments of the present disclosure, the pipe diameters of the first section 371 and the second section 372 are relatively small, which can meet the liquid discharge requirements while achieving a better noise reduction effect.

In some embodiments, as illustrated in FIG. 3 and FIG. 4, the hydrogen generator 10 further includes a liquid-level detection apparatus 390 and a control module 700. The liquid-level detection apparatus 390 is disposed inside the separator body 340. The liquid-level detection apparatus 390 may be a liquid level gauge and is configured to detect a liquid level inside the separator body 340. The control module 700 is a controller, such as a programmable logic controller (PLC) single-chip microcomputer, a printed circuit board (PCB), etc. Both the liquid-level detection apparatus 390 and the liquid discharge valve 380 are connected to the control module 700. The control module 700 is configured to receive the liquid level sent by the liquid-level detection apparatus 390, and control an operation of the liquid discharge valve 380 according to the liquid level to open or close the liquid discharge pipe 370. Exemplarily, the control module 700 is designed with a first liquid level threshold and a second liquid level threshold, where the first liquid level threshold is greater than the second liquid level threshold. When the detected liquid level exceeds the first liquid level threshold, the control module 700 controls the liquid discharge valve 380 to open the liquid discharge pipe 370 for conduction to discharge the separated liquid. When the detected liquid level value is lower than the second liquid level threshold, the control module 700 controls the liquid discharge valve 380 to close the liquid discharge pipe 370 for cut-off to stop liquid discharge. Automatically controlling the opening or closing of the liquid discharge valve 380 according to the liquid level value is simple to operate and highly automated.

In some embodiments, as illustrated in FIG. 1 and FIG. 2, the hydrogen generator further includes a flow display module 800. The flow display module 800 may be a flowmeter. The flow display module 800 is mounted on the gas outlet pipeline 430 in communication with the fourth gas outlet 420. The flow display module 800 is configured to display a flow rate of the hydrogen discharged from the purification apparatus 400.

In some embodiments, as illustrated in FIG. 1 and FIG. 2, the hydrogen generator further includes a pressure display module 900. The pressure display module 900 may be a pressure gauge. The pressure display module 900 is mounted on the gas outlet pipeline 430 in communication with the fourth gas outlet 420. The pressure display module 900 is configured to display a gas pressure inside the purification apparatus 400.

By mounting the flow display module 800 and the pressure display module 900 on the gas outlet pipeline 430, real-time display of flow variation and pressure variation of the hydrogen generator can be achieved, thereby providing intuitive observation and meeting different user requirements.

In some embodiments, as illustrated in FIG. 1 and FIG. 4, the hydrogen generator further includes a pressure switch 440 and a control module 700. The pressure switch 440 has a pressure detection function. The pressure switch 440 is disposed on the gas outlet pipeline 430 in communication with the fourth gas outlet 420. The pressure switch 440 is configured to detect a pressure inside the purification apparatus 400 and the gas outlet pipeline 430. The pressure switch 440 is connected to the control module 700. The control module 700 is configured to control the pressure switch 440 to transmit a signal to the control module 700 according to the pressure, to control the power supply 600 to be powered off or powered on.

Exemplarily, the control module 700 is designed with a pressure threshold. The pressure threshold includes an upper pressure threshold and a lower pressure threshold. When the pressure switch 440 detects that the pressure exceeds the upper pressure threshold, the control module 700 controls the pressure switch 440 to be turned on and controls the power supply 600 to be powered off, thereby reducing the probability of excessive pressure caused by the continuous operation of the electrolyzer 100 and ensuring the safety and service life of the hydrogen generator. When the pressure switch 440 detects that the pressure is lower than the lower pressure threshold, the control module 700 controls the power supply 600 to be powered on, and the electrolyzer 100 resumes operation, thereby ensuring the continuity of hydrogen production as well as the safety and service life of the product. When the pressure detected by the pressure switch 440 is between the upper and lower pressure thresholds, the control module 700 controls the power supply 600 to stop supplying power.

In some embodiments, as illustrated in FIG. 1, the gas outlet pipeline 430 is further provided with a first check valve 460. The first check valve 460 can prevent hydrogen backflow and ensure the purity of the hydrogen produced by the hydrogen generator.

In some embodiments, as illustrated in FIG. 1, the gas outlet pipeline 430 is further provided with a safety valve 470. When the pressure exceeds a preset pressure, the safety valve 470 opens to relieve pressure, thereby ensuring the safety of the hydrogen generator.

In some embodiments, as illustrated in FIG. 1, a second check valve 250 is provided on the pipeline through which the first liquid outlet 120 is in communication with the second liquid inlet 210. By providing the second check valve 250, the electrolyte in the electrolyte tank 200 is prevented from flowing back into the electrolyzer 100.

In some embodiments, the concentration C of the alkaline substance in the electrolyte in the electrolyzer 100 satisfies: 0.1 mol/L ≤ C ≤ 2 mol/L. The value of C may be 0.1 mol/L, 0.5 mol/L, 1.0 mol/L, 1.2 mol/L, 1.5 mol/L, 1.9 mol/L, 2 mol/L, or other unlisted values.

In some embodiments of the present disclosure, the concentration of the alkaline substance in the electrolyte required by the electrolyzer 100 is relatively low, and the requirements for the acid-alkali resistance of the materials required by the electrolyzer 100 are low, thereby reducing equipment investment and maintenance costs. In addition, the voltage of the electrolyzer 100 is between 1.85 V and 2.0 V, so that the voltage required by the electrolyzer 100 is low and energy consumption can be reduced.

In some embodiments, as illustrated in FIG. 2, a heat dissipation apparatus 510 is further provided inside the housing 500. The heat dissipation apparatus 510 is a fan, and one or more fans may be provided. The fan may be disposed near the electrolyzer 100 and the control module 700 to dissipate heat from the main heat-generating components, thereby reducing the temperature inside the housing 500 and improving the electrolysis efficiency.

## Claims

1. A hydrogen generator, comprising:
an electrolyzer (100), wherein the electrolyzer (100) comprises an anion-exchange membrane (140), and the electrolyzer (100) has a first liquid inlet (110), a first liquid outlet (120), and a first gas outlet (130);
an electrolyte tank (200), wherein the electrolyte tank (200) has a second liquid inlet (210), a second liquid outlet (220), a filling port (230), and a second gas outlet (240), the first liquid inlet (110) is in communication with the second liquid outlet (220) through a pipeline, the first liquid outlet (120) is in communication with the second liquid inlet (210) through a pipeline, and the second gas outlet (240) is configured to discharge oxygen;
a gas-liquid separator (300), wherein the gas-liquid separator (300) is provided with a first gas inlet (310), a liquid discharge outlet (320), and a third gas outlet (330), the first gas inlet (310) is in communication with the first gas outlet (130) through a pipeline, and the liquid discharge outlet (320) is configured to discharge liquid separated by the gas-liquid separator (300);
a purification apparatus (400), wherein the purification apparatus (400) is provided with a second gas inlet (410) and a fourth gas outlet (420), and the third gas outlet (330) is in communication with the second gas inlet (410) through a pipeline; and
a housing (500), wherein the electrolyzer (100), the electrolyte tank (200), the gas-liquid separator (300), and the purification apparatus (400) are mounted in the housing (500).

2. The hydrogen generator of claim 1, further comprising:
a power supply (600), wherein the power supply (600) is electrically connected to the electrolyzer (100), the power supply (600) is disposed in the housing (500), and the power supply (600) is configured to supply power to the electrolyzer.

3. The hydrogen generator of claim 2, wherein the gas-liquid separator (300) comprises:
a separator body (340), wherein the first gas inlet (310), the liquid discharge outlet (320), and the third gas outlet (330) are disposed on the separator body (340), and the third gas outlet (330) is disposed opposite to the liquid discharge outlet (320) in an axial direction of the separator body (340);
a filter (350), wherein the filter (350) is disposed inside the separator body (340) and is disposed opposite to the first gas inlet (310); and
a gas-liquid separation mechanism (360), wherein the gas-liquid separation mechanism (360) is disposed inside the separator body (340) and is arranged opposite to the third gas outlet (330).

4. The hydrogen generator of claim 3, wherein the gas-liquid separation mechanism (360) comprises a cyclone plate (361), a demister (362), and a flow guide cylinder (363), both the flow guide cylinder (363) and the demister (362) are fixedly connected to the separator body (340), the cyclone plate (361) is circumferentially mounted on the flow guide cylinder (363), and the demister (362) is closer to the third gas outlet (330) than the flow guide cylinder (363).

5. The hydrogen generator of claim 3 or 4, wherein the gas-liquid separator (300) further comprises a liquid discharge pipe (370) in communication with the liquid discharge outlet (320), and the liquid discharge pipe (370) is provided with a liquid discharge valve (380).

6. The hydrogen generator of claim 5, wherein the liquid discharge pipe (370) comprises a first section (371) and a second section (372) in communication with the first section (371), the first section (371) is located between the liquid discharge outlet (320) and the liquid discharge valve (380), the second section (372) is located on one side of the liquid discharge valve (380) facing away from the liquid discharge outlet (320), and a pipe diameter of the first section (371) is larger than a diameter of the second section (372).

7. The hydrogen generator of claim 6, wherein the pipe diameter of the first section (371) is *D1* and the pipe diameter of the second section (372) is *D2,* and *D1 = a* * D2, wherein 1.6 ≤ *a* ≤ 8.

8. The hydrogen generator of claim 6 or 7, wherein the pipe diameter of the first section (371) is *D1,* and 4 mm ≤ *D1* ≤ 8 mm.

9. The hydrogen generator of any one of claims 6 to 8, wherein the pipe diameter of the second section (372) is *D2,* and 1.0 mm ≤ *D2* ≤ 2.5 mm.

10. The hydrogen generator of claim 5, further comprising:
a liquid-level detection apparatus (390), wherein the liquid-level detection apparatus (390) is disposed inside the separator body (340), the liquid-level detection apparatus (390) is configured to detect a liquid level inside the separator body (340); and
a control module (700), wherein both the liquid-level detection apparatus (390) and the liquid discharge valve (380) are connected to the control module (700), and the control module (700) is configured to:
receive the liquid level sent by the liquid-level detection apparatus (390); and
control an operation of the liquid discharge valve (380) according to the liquid level to open or close the liquid discharge pipe (370).

11. The hydrogen generator of any one of claims 2 to 10, further comprising:
a pressure switch (440), wherein the pressure switch (440) is mounted on the gas outlet pipeline (430) in communication with the fourth gas outlet (420), and the pressure switch (440) is configured to detect a pressure inside the purification apparatus (400) and the gas outlet pipeline (430);
a control module (700), wherein the pressure switch (440) is connected to the control module (700), and the control module (700) is configured to:
control the pressure switch (440) to transmit a signal to the control module (700) according to the pressure, to control the power supply (600) to be powered off or powered on.

12. The hydrogen generator of claim 11, wherein the gas outlet pipeline (430) is further provided with a first check valve (460) and/or a safety valve (470).

13. The hydrogen generator of any one of claims 1 to 12, further comprising:
a flow display module (800), wherein the flow display module (800) is mounted on the gas outlet pipeline (430) in communication with the fourth gas outlet (420), and the flow display module (800) is configured to display a flow rate of hydrogen discharged from the purification apparatus (400).

14. The hydrogen generator of any one of claims 1 to 13, further comprising:
the pressure display module (900), wherein the pressure display module (900) is mounted on the gas outlet pipeline (430) in communication with the fourth gas outlet (420), and the pressure display module (900) is configured to display a gas pressure inside the purification apparatus (400).

15. The hydrogen generator of any one of claims 1 to 14, wherein a second check valve (250) is provided on the pipeline through which the first liquid outlet (120) is in communication with the second liquid inlet (210).

16. The hydrogen generator of any one of claims 1 to 15, wherein a concentration *C* of an alkaline substance in electrolyte of the electrolyzer (100) satisfies: 0.1 mol/L ≤ *C* ≤ 2 mol/L.

17. The hydrogen generator of any one of claims 1 to 16, wherein a heat dissipation apparatus (510) is further provided inside the housing (500).
